# EUROPÄISCHE PATENTSCHRIFT

(11) **EP 0 347 691 B1**
(45) Veröffentlichungstag und Bekanntmachung des Hinweises auf die Patenterteilung: **10.01.1996**
(21) Anmeldenummer: 89110559.5
(22) Anmeldetag: 10.06.1989
(51) Int. Cl.: C08J 5/00, C08J 9/34, B29C 41/22

(54) **Mit einer konturierten, mehrschichtigen Folie versehene Polyurethan-Formkörper, Verfahren zu ihrer Herstellung und ihre Verwendung**
Polyurethane amide provided with a contoured multi-laver film, its use and a method for making it
Article en polyuréthane, muni d'une feuille multicouche profilée, procédé de sa fabrication, et utilisation

(30) Priorität: 18.06.1988 DE 3820704
(43) Veröffentlichungstag der Anmeldung: 27.12.1989
(73) Patentinhaber: BASF Aktiengesellschaft, D-67063 Ludwigshafen (DE)
(72) Erfinder: Horn, Peter, Dr., D-6900 Heidelberg (DE); Reich, Erhard, Dr., D-2845 Damme (DE); Henning, Rainer, Dr., D-4400 Münster (DE)

(56) Entgegenhaltungen:
- EP-A- 0 145 999
- EP-A- 0 275 009
- US-A- 4 455 340

## Beschreibung

Gegenstand der Erfindung sind mit einer konturierten, mehrschichtigen Folie versehene Polyurethan-Formkörper, die bestehen aus
a) einer Deckschicht aus Lack,
b) einer Mittelschicht aus einer Urethan- und/oder Harnstoffgruppen enthaltenden Folie, hergestellt aus einer hitzehärtbaren Stoffmischung und
c) einer Hinterschicht aus einem kompakten oder zelligen Polyurethan, die gegebenenfalls Einleger und/oder Verstärkungsmaterialien enthält.

Die Herstellung von Formschaumstoffen aus Polyisocyanat-Polyadditionsprodukten, beispielsweise von Heißform-, Kaltform- oder Integralschaumstoffen, ist Gegenstand zahlreicher Patent- und Literaturveröffentlichungen. Beispielhaft verwiesen wird auf die Publikationen in "Advances in Urethane Science and Technology", Volume 1 bis 8, von K.C. Frisch et al., Technomic Publishing Co. Inc., 1971-1981, die Monographie von J.H.Saunders und K.C. Frisch "High Polymers", Band XVI, Polyurethanes, Teil 1 und 2, Verlag Interscience Publishers, 1962 und 1964 oder "Integralschaumstoffe" von H. Piechota und H. Röhr, Carl-Hanser-Verlag, München, Wien, 1975.

Sofern für die Anwendung im Kraftfahrzeug-Innenraum, z.B. als Verkleidungselemente, keine Formteile aus Integralschaumstoff in Betracht kommen, müssen die Formschaumstoffe mit einer Dekoroberfläche, z.B. Geweben aus Kunststoff- oder Naturfasern oder Thermoplastfolien, ausgerüstet sein. Die Dekoroberfläche kann beispielsweise mit der Kernschicht verklebt werden. Nach einer anderen Verfahrenstechnik können vorgeformte Bezugsmaterialien hinterschäumt werden. Hierzu stehen im wesentlichen zwei Methoden zur Verfügung. Gasdichte Bezugsstoffe oder Folien werden formenschlüssig im Formwerkzeug tiefgezogen oder nach dem In-Mould-Coating-Verfahren werden Einoder Zweikomponenten-Lacke in das Formwerkzeug eingespritzt. Nach beiden Verfahrensvarianten wird anschließend das Bezugsmaterial oder die Lackschicht hinterschäumt (Kunststoff-Handbuch, Band VII, "Polyurethane", 2. Auflage, 1983, herausgegeben von Dr. G. Oertel, Carl-Hanser-Verlag, München, Wien).

Als geeignete Dekormaterialien finden derzeit überwiegend Polyvinylchlorid (PVC)- oder PVC/Acrylnitril-Butadien-Styrol (ABS)-Copolymerisat-Folien Verwendung. Derartige Kunststoffolien besitzen jedoch erhebliche Nachteile. Zur Erzielung der anwendungstechnisch erforderlichen Materialeigenschaften, wie z.B. Weiterreißfestigkeit, Reißdehnung oder Griffweichheit, müssen die PVC- oder PVC/ABS-Folien in der Regel durch Zusatz von Weichmachern, wie z.B. Phthalsäureestern, modifiziert werden. Zur Gewährleistung der notwendigen Thermostabilität von ungefähr 130°C müssen die vorgenannten Folien mit Schwermetallstabilisatoren ausgerüstet werden. Die eingesetzten Weichmacher enthalten oder bilden durch Alterung flüchtige Bestandteile, die zu einer unerwünschten Belagbildung, insbesondere an den Fensterscheiben, dem sogenannten "Fogging" führen.

Durch Ausschwitzen der Weichmacher werden die Folien ferner im Laufe der Zeit hart, spröde und rissig. Ein anderer schwerwiegender Nachteil basiert auf der gegenseitigen negativen Beeinflussung von PVC- bzw. PVC/ABS-Folien und hinterschäumten Polyurethanen, insbesondere wenn die PolyurethanSchaumstoffe in Gegenwart von üblichen Aminkatalysatoren hergestellt wurden, die zu einem raschen Verspröden der Dekorfolie führt. Problematisch ist ferner das Recycling der PVC-Abfälle sowie die Chlorwasserstoffbildung im Brandfalle.

Es hat daher nicht an Versuchen gefehlt, PVC- oder PVC/ABS-Folien durch andere geeignete Materialien, wie z.B. Folien aus thermoplastischem Polyurethan (TPU), zu ersetzen. Da TPU-Folien nach dem Tiefziehen den sogenannten "Memory-Effekt" zeigen, d.h. beim Tiefziehen die gewünschte, genarbte Oberflächenstruktur verlieren, führte ihre Verwendung nicht zum gewünschten Erfolg. Konturierte Polyurethan(PU)-Folien, z.B. für Armaturenbretter, können zwar aus TPU-Pulver nach dem Pulversinterverfahren hergestellt werden. Da diese Methode jedoch einen erheblichen Energiebedarf erfordert, ist sie unwirtschaftlich und führt üblicherweise nur zu bedingt lichtechten PU-Folien.

Zur Beseitigung dieses Nachteils wurden gemäß Kunststoffberater 32, Seiten 27 bis 28 (Okt. 1987, Heft 10), konturierte PU-Folien nach dem Zweikomponenten-Verfahren hergestellt. Mit Hilfe dieses Verfahrens können Formteile mit einer naturgetreuen Abbildung der Oberflächenstruktur, wie z.B. der Ledernarbung, von Nähten u.a. erhalten werden. Schwierigkeiten bei diesem Herstellungsverfahren bereiten die exakte Dosierung der Polyol- und Polyisocyanatkomponente, da bereits geringe Schwankungen im Mischungsverhältnis der Ausgangskomponenten zu einem starken Abfall der mechanischen Eigenschaften, insbesondere der Thermostabilität, der hergestellten Folien führen. Ferner bewirken die Vor- und Nachläufe der Dosierung beträchtliche Materialverluste.

Nach Angaben der prioritätsälteren EP-A-O 275 009 können Kunststoff-Verbundkörper, die aus einem Kunststoff-Schaumstoff und einer mit ihm verbundenen, gegebenenfalls geschäumten Polyurethanaußenschicht bestehen, erhalten werden durch thermisches Aushärten eines lagerstabilen, reaktionsfähigen Polyurethan-Einkomponentensystems, das enthält: feinteilige Polyisocyanate, deren NCO-Gruppen zu 0,1 bis 25 Äquivalentprozent durch Reaktion mit Polyaminen, Hydrazinen, Alkylhydrazinen, Hydraziden, Amidinen und/oder Guanidinen desaktiviert worden sind, Polyamine und/oder Polyole mit Molekulargewichten von 400 bis 8000, gegebenenfalls aromatische Polyamine mit Molekulargewichten von 108 bis 399 und/ oder aliphatische und/oder cycloaliphatische Polyole mit Molekulargewichten von 62 bis 399 als Kettenverlängerungsmittel, gegebenenfalls Katalysatoren und gegebenenfalls Hilfs- und Zusatzstoffe.

Bei Raumtemperatur lagerstabile, durch Hitzeeinwirkung zu Polyurethan-, Polyharnstoff- und/oder Polyisocyanuratgruppen aufweisenden Formteilen härtbare Stoffmischungen werden ferner in der EP-A-O 145 999 beschrieben. Die härtbare Stoffmischung enthält neben mindestens einem höhermolekularen Polyol, mehrfunktionellen Verbindungen mit an (cyclo)aliphatische Reste gebundenen Hydroxylgruppen und/oder an aromatische Reste gebundenen Aminogruppen mit einem Molekulargewicht von 62 bis 400 und organischen Polyisocyanaten, die in Form von diskreten, an der Oberfläche desaktivierten Teilchen dispergiert vorliegen, gegebenenfalls Katalysatoren, Treibmittel, verstärkend wirkende Materialien und Hilfsmittel und/oder Zusatzstoffe.

Aus der US-A-4 455 340 bekannt sind Kunststoff-Verbundkörper, die aus einer Deckschicht aus Lack, einer Zwischenschicht aus einem Polyurethan und einer Hinterschicht aus einem Polyurethanschaumstoff bestehen. Hierbei wird die Polyurethanzwischenschicht nach dem Prepolymerverfahren durch Umsetzung eines NCO-Prepolymeren mit einem zweiten Polyol in Gegenwart eines organischen Verdünnungsmittels hergestellt.

Die Aufgabe der vorliegenden Erfindung bestand darin, geeignete konturierte Folien zu entwickeln, die die obengenannten Nachteile nicht oder nur in untergeordnetem Maße aufweisen und die mit Mischungen zur Bildung von zelligen oder kompakten Polyurethanen hinterschäumt oder ausgefüllt werden können.

Diese Aufgabe konnte überraschenderweise gelöst werden mit Hilfe einer konturierten, Urethan- und/oder Harnstoffgruppen enthaltenden Folie, die hergestellt wird aus einer bei Raumtemperatur lagerbeständigen, hitzehärtbaren Stoffmischung und die als Mittelschicht (b) zur Bildung des Polyurethan-Formkörpers Anwendung findet.

Gegenstand der Erfindung sind somit mit einer konturierten, mehrschichtigen Folie versehene Polyurethan-Formkörper, die bestehen aus
a) einer Deckschicht aus Lack,
b) einer Mittelschicht aus einer Urethan- und/oder Harnstoffgruppen enthaltenden Folie, und
c) einer Hinterschicht aus einem kompakten oder zelligen Polyurethan, die gegebenenfalls Einleger und/oder Verstärkungsmaterialien enthält.
und die dadurch gekennzeichnet sind, daß die Urethan- und/oder Harnstoffgruppen enthaltende Folie der Mittelschicht (b) hergestellt wird durch Aushärten lassen bei 60 bis 150°C einer hitzehärtbaren Stoffmischung, die enthält
A. ein organisches Polyisocyanat,
B. mindestens eine Verbindung mit mindestens zwei gegenüber Isocyanatgruppen reaktiven Wasserstoffatomen und einem durchschnittlichen Molekulargewicht von 250 bis 8500,
   wobei man ein bei Raumtemperatur festes organisches Polyisocyanat (A), in Form von diskreten Teilchen mit einem Teilchendurchmesser von 0,1 bis 150 µm, an der Teilchenoberfläche durch chemische Reaktion mit einem Desaktivierungsmittel, hergestellt aus einem Mol eines primären organischen Amins mit 2 bis 32 Kohlenstoffatomen, ausgewählt aus der zierte Polyisocyanat in mindestens einer Verbindung mit mindestens zwei gegenüber Isocyanatgruppen reaktiven Wasserstoffatomen (B) dispergiert,
C. Kettenverlängerungsmittel und/oder Vernetzungsmittel mit einem durchschnittlichen Molekulargewicht von 62 bis 500 und einer durchschnittlichen Funktionalität von 2 bis 4 und
D. Katalysatoren

Gegenstände der Erfindung sind ferner ein Verfahren zur Herstellung von mit einer konturierten, mehrschichtigen Folie versehenen Formkörpern, die bestehen aus
a) einer Deckschicht aus Lack,
b) einer Mittelschicht aus einer Urethan- und/oder Harnstoffgruppen enthaltenden Folie, und
c) einer Hinterschicht aus einem kompakten oder zelligen Polyurethan, die gegebenenfalls Einleger und/oder Verstärkungsmaterialien enthält.
und das dadurch gekennzeichnet ist, daß man auf die konturierte Innenfläche eines auf 60 bis 150°C temperierten Formwerkzeugs eine Lackschicht aufträgt,
nach ausreichender Viskosität der Lackschicht diese mit einer hitzehärtbaren Stoffmischung, die enthält:
A. ein organisches Polyisocyanat,
B. mindestens eine Verbindung mit mindestens zwei gegenüber Isocyanatgruppen reaktiven Wasserstoffatomen und einem durchschnittlichen Molekulargewicht von 250 bis 8500,
   wobei man ein bei Raumtemperatur festes organisches Polyisocyanat (A), in Form von diskreten Teilchen mit einem Teilchendurchmesser von 0,1. bis 150 µm, an der Teilchenoberfläche durch chemische Reaktion mit einem Desaktivierungsmittel, hergestellt aus einem Mol eines primären organischen Amins mit 2 bis 32 Kohlenstoffatomen, ausgewählt aus der Gruppe der aromatischen, aliphatischen, cycloaliphatischen, cycloaliphatisch-aliphatischen und aromatisch-aliphatischen Diamine oder Mischungen davon und 1,5 bis 2,5 Molen einer organischen Monocarbonsäure oder deren Anhydrid, mit mindestens 6 Kohlenstoffatomen oder einer Arylsulfonsäure, desaktiviert, indem man 0,1 bis 20 Äquivalent% der insgesamt vorhandenen Isocyanatgruppen von (A) mit dem Desaktivierungsmittel umsetzt und das erhaltene oberflächenmodifizierte Polyisocyanat in mindestens einer Verbindung mit mindestens zwei gegenüber Isocyanatgruppen reaktiven Wasserstoffatomen (B) dispergiert,
C. Kettenverlängerungsmittel und/oder Vernetzungsmittel mit einem durchschnittlichen Molekulargewicht von 62 bis 500 und einer durchschnittlichen Funktionalität von 2 bis 4 und
D. Katalysatoren

beschichtet,
die Stoffmischung aushärten läßt und die gebildete mehrschichtige Folie mit einer reaktionsfähigen, treibmittelhaltigen oder treibmittelfreien Mischung zur Bildung der Polyurethane behandelt
oder die gebildete Folie aus dem Formwerkzeug entnimmt und danach direkt oder nach einer Zwischenlagerung in einer getrennten Verfahrensstufe mit einer reaktionsfähigen, treibmittelhaltigen oder treibmittelfreien Mischung zur Bildung von Polyurethanen behandelt und
die Verwendung der mit einer konturierten, mehrschichtigen Folie versehenen Polyurethan-Formkörper nach Anspruch 1 als Bauelemente in Verkehrsmitteln, insbesondere als Armaturenbrett oder Verkleidungselemente für Türen oder Ablagebehälter in Kraftfahrzeugen.

Die erfindungsgemäßen Polyurethan-Formkörper zeigen eine deutlich verbesserte Lichtstabilität und ausgezeichnete Thermostabilität. Selbst bei einer Temperaturbelastung von 130°C über einen Zeitraum von 500 Stunden tritt keine nennenswerte Verfärbung des Formkörpers auf. Die Urethanund/oder Harnstoffgruppen enthaltende Folie behält ihre ursprüngliche Dehnbarkeit bei. Vorteilhaft ist insbesondere, daß die hinterschäumten Formkörper, im Gegensatz zu mit PVC- oder PVC/ABS-Folien beschichteten Formteilen, keine negative Wechselwirkung zwischen dem Polyurethanschaum der Hinterschäumung und der Folie zeigen, d.h. die Formkörper nicht verspröden, und eine ausgezeichnete Folien-Polyurethanschaum-Haftung besitzen. Außerdem können die Folien der Mittelschicht (b), z.B. mit Pigmenten, eingefärbt und auf diese Weise dem Farbton der Lackdeckschicht (a) angeglichen werden.

Zu den Aufbaukomponenten zur Herstellung der erfindungsgemäßen Formkörper sowie zur Herstellung der Urethan- und/oder Harnstoffgruppen enthaltenden Folie als Mittelschicht (b) ist folgendes auszuführen:
a) Zur Erzielung einer im wesentlichen lichtstabilen Oberfläche werden die erfindungsgemäßen Polyurethan-Formkörper mit einer Deckschicht aus Lack versehen. Geeignete, möglichst schnell härtende Lacksysteme werden hierzu auf die mit einem Trennmittel versehene Oberfläche des zweckmäßigerweise temperierten Formwerkzeugs aufgebracht. In betracht kommen beispielsweise Polyesterlacke, die teilweise lösungsmittelfrei sind und daher schnell trocknen, Epoxidlacke, die ebenso wie Polyesterlacke eine hohe Deckkraft aufweisen und vorzugsweise Polyurethanlacke, die aufgrund ihrer chemische Verwandtschaft zu der Urethanund/oder Harnstoffgruppen enthaltenden Folie eine hervorragende Haftung zeigen, wobei die Bindung an die Folie teilweise über reaktive Gruppen in der Folie erfolgt. Die Polyurethanlacke sind üblicherweise lösungsmittelarm, zeigen ein gutes Werteniveau, insbesondere eine hohe Elastizität. Zur Verkürzung der Trocknungszeiten, werden die Polyurethanlacke zweckmäßigerweise bei 60 bis 150°C, vorzugsweise 80 bis 110°C getrocknet.
   Zur Bildung der Deckschicht (a) eignen sich auch Trennlacke, die einerseits eine gute Haftung zur Urethan- und/oder Harnstoffgruppen enthaltenden Folie aufweisen, andererseits aber keine Bindung mit dem Formwerkzeugmaterial eingehen. Diese Trennlacke werden in bekannter Weise auf die Oberfläche des Formwerkzeugs aufgebracht, z.B. vorzugsweise durch Aufsprühen, ohne daß ein zusätzliches Trennmittel erforderlich ist.
   Die Deckschicht (a) besitzt vorteilhafterweise eine Dicke von 0,01 bis 200 µm, vorzugsweise von 0,4 bis 100 µm, wozu das Lacksystem in einer Menge von 0,15 bis 60 g/m, vorzugsweise von 6 bis 30 g/m, berechnet als lösungsmittelfreie Trockenmasse aufgetragen wird.
b) Erfindungsgemäß besteht die Mittelschicht (b) des Formkörpers aus einer Urethan- und/oder Harnstoffgruppe enthaltenden Folie, die hergestellt wird durch Aushärten lassen bei 60 bis 150°C, vorzugsweise bei 80 bis 130°C einer, hitzehärtbaren Stoffmischung, die enthält:
   A. ein organisches Polyisocyanat,
   B. mindestens eine Verbindung mit mindestens zwei gegenüber Isocyanatgruppen reaktiven Wasserstoffatomen und einem durchschnittlichen Molekulargewicht von 250 bis 8500,
      wobei man ein bei Raumtemperatur festes organisches Polyisocyanat (A), in Form von diskreten Teilchen mit einem Teilchendurchmesser von 0,1 bis 150 µm, an der Teilchenoberfläche durch chemische Reaktion mit einem Desaktivierungsmittel desaktiviert, indem man 0,1 bis 20 Äquivalent% der insgesamt vorhandenen Isocyanatgruppen von (A) mit dem Desaktivierungsmittel umsetzt und das erhaltene oberflächenmodifizierte Polyisocyanat in mindestens einer Verbindung mit mindestens zwei gegenüber Isocyanatgruppen reaktiven Wasserstoffatomen (B) dispergiert,
   C. Kettenverlängerungsmittel und/oder Vernetzungsmittel mit einem durchschnittlichen Molekulargewicht von 62 bis 500 und einer durchschnittlichen Funktionalität von 2 bis 4 und
   D. Katalysatoren.

   Geeignete, bei Raumtemperatur lagerstabile, hitzehärtbare Stoffmischungen der genannten Art sind bekannt und werden z.B. beschrieben in der EP-A-0 062 780 (US 4 400 497), EP-A-0 100 507 (US 4 507 456) und EP-A-0 100 508 (US 4 525 570).
   Zu ihrer Herstellung finden zweckmäßigerweise folgende Ausgangsstoffe Verwendung:
   A. Als organische Polyisocyanate (A) kommen die an sich bekannten, technisch gut zugänglichen aliphatischen, cycloaliphatischen, aromatischen, cycloaliphatisch-aliphatischen und aromatisch-aliphatischen mehrwertigen Isocyanate mit einem Schmelzpunkt über 30°C in Betracht. Sofern ihr Schmelzpunkt nicht über 30°C liegt, werden die organischen Polyisocyanate modifiziert, so daß die Schmelzpunkte über 30°C liegen. Beispielhaft genannt seien im einzelnen:
      Alkylendiisocyanate mit 2 bis 12, vorzugsweise 4 bis 6 Kohlenstoffatomen im Alkylenrest, wie 1,2-Ethan-, 1,4-Butan-, 2-Ethyl-1,4-butan-, 2-Methyl-1,5-pentan-, 1,6-Hexan-, 2-Ethyl-1,6-hexan-, 1,8-Octan-, 1,10-Decan- und 1,12-Dodecan-diisocyanat, cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan, 2,4- und 2,6-Hexahydrotoluylen-diisocyanat sowie beliebige Gemische dieser Isomeren, 4,4′-, 2,2'- und 2,4'-Dicyclohexylmethan-diisocyanat sowie beliebige Gemische aus mindestens zwei dieser Isomeren; araliphatische Diisocyanate, wie 1,2-, 1,3- und 1,4-Xylylen-diisocyanat und 2,3,5,6-Tetramethyl-1,4-xylylen-diisocyanat und aromatische Polyisocyanate, wie 4,4'-, 2,4'- und 2,2'-Diisocyanato-diphenylmethan und die entsprechenden Gemische aus mindestens zwei dieser Isomeren, 2,4- oder 2,6-Diisocyanato-toluol und die entsprechenden Isomerengemische, 1,5-Diisocyanato-naphthalin, Polyphenyl-polymethylen-polyisocyanate und Gemische aus den isomeren Diisocyanato-diphenylmethanen und Polyphenyl-polymethylen-polyisocyanaten. Die genannten Di- und Polyisocyanate können einzeln oder in Form von Mischungen eingesetzt werden.
      Geeignet sind auch sogenannte modifizierte mehrwertige Isocyanate, d.h. Produkte die durch chemische Umsetzung obiger Di- und/oder Polyisocyanate erhalten werden. Beispielhaft genannt seien bei Raumtemperatur feste Ester-, Harnstoff-, Biuret-, Allophanat-, Carbodiimid- und vorzugsweise Urethan-, Uretdion- und/oder Isocyanuratgruppen enthaltende Di- und/oder Polyisocyanate.
      Besonders bewährt haben sich und daher vorzugsweise verwendet werden bei Raumtemperatur feste Di- und/oder Polyisocyanate, die in den Verbindungen mit mindestens zwei reaktiven Wasserstoffatomen (B) im wesentlichen unlöslich oder nur in untergeordneten Mengen löslich sind, wie 4,4'-Diisocyanato-diphenylmethan und 1,5-Naphthalin-diisocyanat und die mit Harnstoff-, Urethan-, Uretdion-, Ester- und/oder Isocyanuratgruppen modifizierten Di- und/oder Polyisocyanate auf Basis von 1,6-Hexan-diisocyanat, 1-Isocyanato-3,3,5-trimethyl-5-isocyanatomethyl-cyclohexan, 2,3,5,6-Tetramethyl-1,4-xylylen-diisocyanat, 2,4'-, 4,4'-Diisocyanato-diphenylmethan und insbesondere 2,4- und/oder 2,6-Diisocyanato-toluol.
      Modifizierte Polyisocyanate der bevorzugten Art sind insbesondere Additionsprodukte aus Diisocyanato-toluolen und Trimethylolpropan, trimerisierte Isocyanuratgruppen enthaltende Diisocyanato-toluole und Diisocyanato-diphenylmethane und dimerisierte Uretdiongruppen aufweisende Diisocyanato-toluole, 4,4'- und/oder 2,4'-Diisocyanato-diphenylmethane sowie Diisocyanato-arylharnstoffe mit der allgemeinen Formel 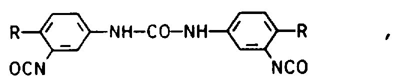 in der R einen niedermolekularen, linearen oder verzweigten Alkylrest mit 1 bis 4 Kohlenstoffatomen, z.B. einen Methylrest, einen Alkoxyrest mit 1 bis 4 Kohlenstoffatomen, z.B. einen Ethoxyrest, oder ein Halogenatom, z.B. ein Chloratom, bedeutet und Diisocyanato-benzoesäurephenylester der Formeln 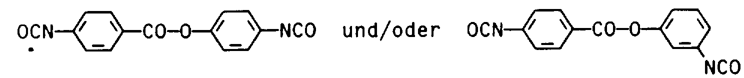 Insbesondere Anwendung finden Uretdiongruppen gebunden enthaltende modifizierte Diisocyanate auf der Grundlage von 2,4- und/oder 2,6-Diisocyanato-toluol, 2,4'- und/oder 4,4'-Diisocyanato-diphenylmethan, 1,6-Hexan-diisocyanat und 1-Isocyanato-3,3,5-trimethyl-5-isocyanatomethyl-cyclohexan, wobei zur Herstellung von lichtbeständigen Folien zweckmäßigerweise bevorzugt Stoffmischungen auf Basis von aliphatischen oder cycloaliphatischen modifizierten Diisocyanaten sowie 2,3,5,6-Tetramethyl-1,4-xylylen-diisocyanat eingesetzt werden. Die organischen und/oder modifizierten organischen Polyisocyanate (A) können einzeln oder in Form von Mischungen verwendet werden.
   B. Als Verbindung mit mindestens zwei reaktiven Wasserstoffatomen finden, zweckmäßigerweise solche mit einer Funktionalität von 2 bis 8, vorzugsweise 2 bis 4 und insbesondere 2 und/oder 3 und einem Molekulargewicht von 250 bis 8500, vorzugsweise 600 bis 5600 und insbesondere 1800 bis 4000 Anwendung, wobei in Abhängigkeit z.B. von der Struktur, dem Molekulargewicht und der Funktionalität der Verbindungen die aus den Stoffmischungen hergestellten Urethan- und/oder Harnstoffgruppen enthaltende Endprodukte bekanntermaßen von weichelastisch bis sprödhart variiert werden können. Bewährt haben sich z.B. Polyether-polyamine, hydroxylgruppenhaltige Polyether-polyamine und/oder vorzugsweise Polyole ausgewählt aus der Gruppe der Polyether-polyole, polymermodifizierten Polyether-polyole, Polyester-polyole, Polythioether-polyole, hydroxylgruppenhaltigen oder -freien Polyesteramide, hydroxylgruppenhaltigen Polyacetale und hydroxylgruppenhaltigen aliphatischen Polycarbonate oder Mischungen aus den Polyether-polyaminen und Polyolen oder Mischungen aus mindestens zwei der genannten Polyole. Vorzugsweise Anwendung finden Polyester-polyole und/oder insbesondere Polyether-polyole.
      Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure und Fumarsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20-35 : 35-50 : 20-32 Gew.Teilen, und insbesondere Adipinsäure. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton, oder Hydroxycarbonsäuren, z.B. ω-Hydroxycapronsäure.
      Die Polyester-polyole besitzen vorzugsweise eine Funktionalität von 2 bis 3 und ein Molekulargewicht von 1.000 bis 3.000 und vorzugsweise 1.800 bis 2.500.
      Insbesondere als Polyole verwendet werden jedoch Polyether-polyole, die nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest und gegebenenfalls einem Startermolekül, das 2 bis 8, vorzugsweise 2 bis 4, reaktive Wasserstoffatome gebunden enthält, hergestellt werden.
      Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N-und N,N'-dialkylsubstituierte Diamine mit 1 bis 4 Kohlenstoffatomen im Alkylrest, wie gegebenenfalls mono- und dialkylsubstituiertes Ethylendiamin, 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diamino-diphenylmethan.
      Als Startermoleküle kommen ferner in Betracht Alkanolamine, wie Ethanolamin, Diethanolamin, N-Methyl- und N-Ethyl-ethanolamin, N-Methyl-und N-Ethyl-diethanolamin und Triethanolamin und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit, Sucrose und Saccharose.
      Die Polyether-polyole, vorzugsweise Polyoxypropylen-, Polyoxypropylen-polyoxyethylen-polyole und Polyoxytetramethylen-glykole, besitzen vorzugsweise eine Funktionalität von 2 bis 4 und Molekulargewichte von 250 bis 8.500, vorzugsweise 600 bis 5.600 und insbesondere 1.800 bis 4.000. Sie können ebenso wie die Polyester-polyole einzeln oder in Form von Mischungen verwendet werden. Ferner können sie mit den Polyester-polyolen sowie den hydroxylgruppenhaltigen Polyesteramiden, Polyacetalen, Polycarbonaten und/oder Polyether-polyaminen gemischt werden.
      Anstelle der genannte Polyether-polyole können auch polymermodifizierte Polyether-polyole oder Mischungen aus Polyether-polyolen und polymermodifizierten Polyether-polyolen Anwendung finden. Geeignete polymermodifizierte Polyether-polyole enthalten zweckmäßigerweise 2 bis 50 Gew.%, vorzugsweise 3 bis 25 Gew.%, bezogen auf das Gesamtgewicht, anorganische Füllstoffe, wie z.B. Kaolin oder Aluminiumoxide, organische Füllstoffe, wie z.B. Ruß, Kollophonium oder Melamin oder Polymerpartikel, wobei die Polymerpartikel vorzugsweise ausgewählt sind aus der Gruppe der Polyharnstoffe, Polyhydrazide, tert. Aminogruppen gebunden enthaltenden Polyurethane und Pfropfpolymeren, die vorzugsweise hergestellt werden durch in situ-Polymerisation von olefinisch ungesättigten Monomeren, insbesondere Styrol und/oder Acrylnitril, in den oben beschriebenen Polyether-polyolen. Derartige polymermodifizierte Polyether-polyole und Verfahren zu ihrer Herstellung sind z.B. bekannt aus der EP-B-00 11 752 (US 4 304 708), US-A-4 374 209 und DE-A-32 31 497.
      Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.
      Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.
      Zu den Polyesteramiden zählen z.B. die aus mehrwertigen gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
      Geeignete Polyether-polyamine können aus den obengenannten Polyether-polyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die Aminierung von Polyoxyalkylen-polyolen mit Aminen oder Ammoniak in Gegenwart von Wasserstoff und Katalysatoren (DE 12 15 373), wobei die Hydroxylgruppen partiell oder im wesentlichen vollständig aminiert werden.
      Die erfindungsgemäßen, hitzehärtbaren Stoffmischungen aus dem organischen Polyisocyanat (A), mindestens einer Verbindung mit reaktiven Wasserstoffatomen (B), Kettenverlängerungs- und/oder Vernetzungsmitteln (C) und Katalysatoren (D) enthalten die Polyisocyanate in Form diskreter Teilchen mit Teilchendurchmessern von 0,1 bis 150 µm, vorzugsweise 1 bis 50 µm dispergiert in (B) oder (B) und (C).
      Um zu verhindern, daß bei Raumtemperatur eine Polyadditionsreaktion zwischen den organischen Polyisocyanaten und den Aufbaukomponenten (B) und (C) eintritt, werden die dispergierten Polyisocyanatpartikel an ihrer Oberfläche desaktiviert. Das Desaktivierungsmittel wird hierzu zweckmäßigerweise so gewählt, daß es an der Oberfläche der Polyisocyanatteilchen durch chemische oder physikalische Kräfte gebunden ist und auf diese Weise eine Phasentrennung zwischen den desaktivierten Polyisocyanatteilchen und den übrigen Aufbaukomponenten (B) bis (D) bewirkt wird.
      Für die chemische Desaktivierung werden 0,01 bis 20, vorzugsweise 0,1 bis 10 und insbesondere 0,3 bis 5 Äquivalentprozent der insgesamt vorhandenen Isocyanatgruppen mit dem Desaktivierungsmittel zur Reaktion gebracht.
      Dazu kann das Deskativierungsmittel in den beanspruchten Äquivalenzverhältnissen den Ansätzen zugegeben werden. Ebenfalls geeignet ist ein Verfahren, bei dem das Desaktivierungsmittel in einem überschuß über das beanspruchte Äquivalenzverhältnis zugegeben wird.
      Nach Belegung der Oberfläche der dispersen Phase mit dem Desaktivierungsmittel kommt die desaktivierende Reaktion zum Stillstand.
      Als Desaktivierungsmittel werden Reaktionsprodukte verwendet, die hergestellt werden durch Umsetzung von einem Mol eines primären organischen Amins mit 2 bis 32, vorzugsweise 6 bis 18 Kohlenstoffatomen, ausgewählt aus der Gruppe der aromatischen, aliphatischen, cycloaliphatischen, cycloaliphatisch-aliphatischen und aromatisch-aliphatischen Diamine oder Mischungen davon mit 1,5 bis 2,5 Molen, vorzugsweise 1,8 bis 2,2 Molen und insbesondere ungefähr 2 Molen einer organischen Monocarbonsäure mit mindestens 6 Kohlenstoffatomen, vorzugsweise 12 bis 36 Kohlenstoffatomen und insbesondere 12 bis 18 Kohlenstoffatomen, bei einer Temperatur im Bereich von ungefähr 10 bis 100°C, vorzugsweise 20 bis 80°C.
      Als geeignete primäre organische Diamine seien beispielhaft genannt: lineare oder verzweigtkettige aliphatische Diamine mit 2 bis 12, vorzugsweise 6 bis 12 Kohlenstoffatomen, wie z.B. 1,2-Ethylen-diamin, 1,2- bzw. 1,3-Propylendiamin, 1,4-Butylendiamin, 4-Methyl-pentamethylen-diamin-1,5, 1,5-Pentamethylen-diamin, 2,2,4-Trimethyl-hexamethylen-diamin-1,6, 1,6-Hexamethylen-diamin, 1,8-Octamethylen-diamin, 1,10-Decamethylen-diamin und 1,12-Dodecamethylen-diamin, cycloaliphatische Diamine mit 6 bis 10 Kohlenstoffatomen, wie z.B. Cyclohexan-diamine sowie beliebige Gemische dieser Isomeren, 2,4- und/oder 2,6-Hexahydrotoluylendiamin und Isophoron-diamin, cycloaliphatisch-aliphatische Diamine mit 8 bis 32 Kohlenstoffatomen, vorzugsweise 13 bis 21 Kohlenstoffatomen, wie z.B. 1,4-Hexahydroxylylen-diamin, 4,4'-, 2,4'- und 2,2'-Dicyclohexylmethan-diamin sowie beliebige Gemische dieser Isomeren, 3,3'-Dialkyl- und 3,3',5,5'-Tetraalkyl-4,4'-dicyclohexylmethan-diamine mit 1 bis 4 Kohlenstoffatomen im linearen oder verzweigten Alkylrest, wie z.B. 3,3'-Dimethyl-, 3,3'-Isopropyl-, 3,3',5,5'-Tetramethyl-, 3,3',5,5'-Tetraethyl- oder 3,3'-5,5-Tetraisopropyl-4,4'-diamino-dicyclohexylmethan, aromatische Diamine mit 6 bis 12 Kohlenstoffatomen, wie z.B. Phenylen-diamine, 2,4- und 2,6-Toluylen-diamin und die entsprechenden Isomerengemische und Naphthylendiamine und aromatisch-aliphatische Diamine mit 8 bis 32 Kohlenstoffatomen, vorzugsweise 13 bis 21 Kohlenstoffatomen wie z.B. Xylylendiamin, 4,4'-, 2,4'- und 2,2'-Diamino-diphenylmethan, 3,3'-Dialkyl- und 3,3',5,5'-Tetraalkyl-4,4'-diamino-diphenylmethane mit 1 bis 4 Kohlenstoffatomen im linearen oder verzweigten Alkylrest, wie z.B. 3,3'-Dimethyl-, 3,3'-Diethyl-, 3,3',5,5'-Tetramethyl-, 3,3',5,5'-Tetraethyl-, 3,3',5,5'-Tetraisopropyl-, 3,5-Dimethyl-3',5'-diethyl-, 3,5-Dimethyl-3',5'-diisopropyl-4,4'-diamino-diphenylmethan und 4,4'-Diaminodiphenyl-propan-2,2. Die beispielhaft genannten organischen, primären Diamine können einzeln oder in Form von Mischungen eingesetzt werden. Vorzugsweise Anwendung finden aliphatische, cycloaliphatische oder cycloaliphtisch-aliphatische primäre Diamine mit 6 bis 21 Kohlenstoffatomen.
      Als organische Monocarbonsäuren mit mindestens 6 Kohlenstoffatomen, vorzugsweise 12 bis 36 Kohlenstoffatomen, kommen beispielsweise aromatische Monocarbonsäuren oder deren Anhydride, wie z.B. Benzoesäure, o-, m-, p-Toluylsäure und/oder Anissäure in Betracht. Die aromatischen Monocarbonsäuren können gegebenenfalls auch teilweise oder vollständig durch eine bezüglich der Carboxylgruppe äquivalente Menge einer Polycarbonsäure, wie z.B. Phthalsäure, Trimellitsäure oder Pyromellitsäure, oder deren Anhydride substituiert werden.
      Als besonders geeignet haben sich jedoch aliphatische oder cycloaliphatische, gesättigte oder ungesättigte Carbonsäuren oder ihre Anhydride, mit vorzugsweise mindestens 12 bis 36 Kohlenstoffatomen, insbesondere 12 bis 18 Kohlenstoffatomen erwiesen. Verwendbar sind beispielsweise natürliche oder synthetische Monocarbonsäuren bzw. natürliche Fettsäuregemische wie z.B. Abietinsäure, Palmitinsäure, Stearinsäure, Ölsäure, Elaidinsäure, Linolsäure, Rizinolsäure, Linolensäure oder auch technisch anfallende Fettsäuregemische, wie Spermölfettsäure, Tranfettsäure, Talgfettsäure, Sojaölfettsäure, Palmkernfettsäure, Erdnußfettsäure oder Tallölfettsäure. Bevorzugt sind Stearinsäure und/oder bei Raumtemperatur flüssige Fettsäuren, insbesondere Ölsäure oder auch die Ölsäure enthaltenden technischen Fettsäuregemische.
      Verwendbar sind ferner Arylsulfonsäuren, wie z.B. Benzolsulfonsäure und/oder Toluolsulfonsäuren.
      Die als Desaktivierungsmittel eingesetzten Reaktionsprodukte liegen vorzugsweise als Salze vor. Geeignet sind jedoch auch die aus den Diaminen und Monocarbonsäuren herstellbaren Carbonsäureamide und Salzreste enthaltenden Carbonsäureamide und Mischungen aus den vorgenannten Carbonsäureamiden und Salzen, wobei die Mengenverhältnisse der einzelnen Komponenten in breiten Bereichen variieren können.
      Als Desaktivierungsmittel insbesonders bewährt haben sich und werden daher vorzugsweise eingesetzt Reaktionsprodukte, hergestellt aus einem Mol 3,3'-Dimethyl-4,4-diamino-dicyclohexylmethan und ungefähr 2 Molen Stearinsäure und/oder insbesondere ölsäure.
   C. Die, hitzehärbaren Stoffmischungen enthalten als weitere mit Isocyanatgruppen reaktive Verbindungen Kettenverlängerungsmittel und/oder Vernetzungsmittel (C) mit einem durchschnittlichen Molekulargewicht von 62 bis 500, vorzugsweise von 62 bis 300 und einer Funktionalität von 2 bis 4, vorzugsweise 2 bis 3, die zweckmäpigerweise an aliphatische und/oder cycloaliphatische Reste gebundene Hydroxylgruppen und/oder an aromatische Reste gebundene Aminogruppen aufweisen. Als Beispiele für derartige Kettenverlängerungsoder Vernetzungsmittel seien genannt: mehrwertige Alkohole mit primären und/oder sekundären an aliphatische und/oder cycloaliphatische Reste gebundenen Hydroxylgruppen wie z.B. Ethandiol-1,2, Propandiol-1,3 und -1,2, 2,2-Dimethyl-propandiol-1,3, Butandiol-1,4, -1,3 und -2,3, Pentandiol-1,5, -2,5, Hexandiol-1,6, 1,4-Bis-(hydroxymethyl)-cyclohexan, 1,4-Dihydroxycyclohexan, 1-Hydroxymethyl-4-hydroxycyclohexan, 4,4'-Dihydroxy-dicyclohexylmethan, 4,4'-(Dihydroxy-di-cyclohexyl)-propan-2,2, 1,4-Dihydroxyethyl-hydrochinon, Trimetylolethan, Trimethylolpropan, Hexantriol-1,2,6, Glycerin und Pentaerythrit. Geeignet sind ferner tertiäre Aminogruppen gebunden enthaltende mehrwertige Alkohole wie z.B. N-Alkyl-dialkanolamine, beispielsweise N-Methyl-diethanolamin und Triethanolamin und N,N'-Bis-hydroxyethyl-piperazin. Vorzugsweise verwendet werden 2- und 3-wertige Alkohole, wie Ethandiol-1,2, Butandiol-1,4 und Hexandiol-1,6, Glycerin und Trimethylolpropan und niedermolekulare hydroxylgruppenhaltige Polyoxyalkylenpolyether auf Basis von Ethylenoxid und/oder 1,2-Propylenoxid und den vorgenannten mehrwertigen Alkoholen oder aliphatischen Diaminen mit Molekulargewichten von 60 bis 116 als Startermolekül.
      Als Aufbaukomponente (C) sind ferner aromatische Polyamine geeignet sowie Aminogruppen aufweisende Heterocyclen, deren heterocyclischer Rest aromatischen Charakter besitzt.
      Als aromatische Amine werden zur Herstellung der erfindungsgemäßen Stoffmischung vorzugsweise primäre aromatische Diamine verwendet.
      Zweckmäßigerweise verwendet werden aromatische Diamine, deren primäre Aminogruppen gegenüber Polyisocyanaten keine durch elektronenanziehende Substituenten verursachte verminderte Reaktivität zeigen und vorteilhafterweise solche aromatische Diamine, deren primäre Aminogruppen sterisch gehindert sind. Insbesondere geeignet sind primäre aromatische Diamine der genannten Art, die bei Raumtemperatur flüssig und mit den Verbindungen (B) unter den Verarbeitungsbedingungen ganz oder zumindest teilweise mischbar sind. Bewährt haben sich beispielsweise meta-Phenylendiamin und/oder vorzugsweise alkylsubstituierte meta-Phenylendiamine der Formeln 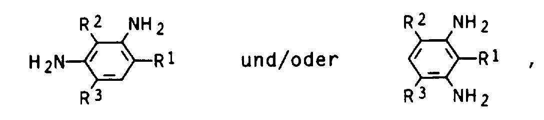 in denen R¹ ein Wasserstoffatom oder ein linearer oder verzweigter Alkylrest mit 1 bis 10, vorzugsweise 1 bis 6 Kohlenstoffatomen ist und R2 und R³ gleiche oder verschiedene Alkylreste mit 1 bis 3 Kohlenstoffatomen, wie z.B. ein Methyl-, Ethyl-, Propyl- oder Isopropylrest sind. Geeignet sind insbesondere solche Alkylreste R¹, bei denen die Verzweigungsstelle am C₁-Kohlenstoffatom sitzt. Neben Wasserstoff seien als Alkylreste R¹ beispielhaft genannt: der Methyl-, Ethyl-, n- und iso-Propyl-, Butyl-, Hexyl-, Octyl-, Decyl-, 1-Methyl-octyl-, 2-Ethyl-octyl-, 1-Methyl-hexyl-, 1,1-Dimethyl-pentyl-, 1,3,3-Trimethyl-hexyl-, 1-Ethyl-pentyl-, 2-Ethyl-pentyl- und vorzugsweise der Cyclohexyl-, 1-Methyl-n-propyl-, tert-Butyl-, 1-Ethyl-n-propyl-, 1-Methyl-n-butyl- und 1,1-Dimethyl-n-propylrest.
      Als alkylsubstituierte m-Phenylendiamine kommen beispielsweise in Betracht: 2,4-Dimethyl-, 2,4-Diethyl-, 2,4-Diisopropyl-, 2,4-Diethyl-6-methyl-, 2-Methyl-4,6-diethyl-, 2,4,6-Triethyl-, 2,4-Dimethyl-6-cyclohexyl-, 2-Cyclohexyl-4,6-diethyl-, 2-Cyclohexyl-2,6-diisopropyl-, 2,4-Dimethyl-6-(1-ethyl-n-propyl)-, 2,4-Dimethyl-6-(1,1-dimethyl-n-propyl)- und 2-(1-Methyl-n-butyl)-4,6-dimethyl-phenylendiamin-1,3.
      Bewährt haben sich ferner Diamino-diphenylmethane, wie z.B. 4,4′- und/ oder 2,4'-Diamino-diphenylmethan, 3,3'-di- und 3,3',5,5'-tetra-n-alkylsubstituierte 4,4'-Diamino-diphenylmethane wie z.B. 3,3'-Dimethyl-, 3,3'5,5'-Tetramethyl-, 3,3'-Diethyl-, 3,3',5,5'-Tetraethyl- und 3,3',5,5'-Tetra-n-propyl-4,4'-diamino-diphenylmethan.
      Anwendung finden vorteilhafterweise Diamino-diphenylmethane der Formel 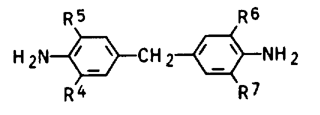 in der R⁴, R⁵, R⁶ und R⁷ gleich oder verschieden sind und einen Methyl-, Ethyl-, Propyl-, Isopropyl-, sek-Butyl- und tert-Butylrest bedeuten, wobei jedoch mindestens einer der Reste ein Isopropyl- oder sek. Butylrest sein muß. Die 4,4'-Diamino-diphenylmethane können auch im Gemisch mit Isomeren der Formeln 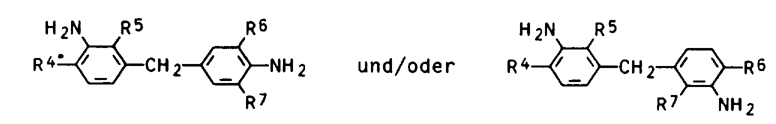 verwendet werden, wobei R⁴, R⁵, R⁶ und R⁷ die obengenannte Bedeutung haben.
      Beispielhaft genannt seien: 3,3',5-Trimethyl-5'-isopropyl-, 3,3',5-Triethyl-5'-isopropyl-, 3,3', 5-Trimethyl-5'-sek-butyl-, 3,3', 5-Triethyl-5'-sek-butyl-4,4'-diamino-diphenylmethan, 3,3'-Dimethyl-5,5'-diisopropyl-, 3,3'-Diethyl-5,5'-diisopropyl-, 3,3'-Dimethyl-5,5'-di-sekbutyl-, 3,3'-Diethyl-5,5'-di-sek-butyl-, 3,5-Dimethyl-3',5'-diisopropyl-, 3,5-Diethyl-3',5'-diisopropyl-, 3,5'-Dimethyl-3',5'-di-sekbutyl-, 3,5-Diethyl-3',5'-di-sek-butyl-4,4'-diamino-diphenylmethan, 3-Methyl-3', 5,5'-triisopropyl-, 3-Ethyl-3',5,5'-triisopropyl-, 3-Methyl-3',5,5'-tri-sek-butyl-, 3-Ethyl-3',5,5'-tri-sek-butyl-4,4'-diamino-diphenylmethan, 3,3'-Diisopropyl-5,5'-di-sek-butyl-, 3,5-Diisopropyl-3',5'-di-sek-butyl-, 3-Ethyl-5-sek-butyl-3',5'-diisopropyl-, 3-Methyl-5-tert-butyl-3', 5'-diisopropyl-, 3-Ethyl-5-sek-butyl-3'-methyl-5'-tert-butyl-, 3,3',5,5'-Tetraisopropyl- und 3,3′,5,5′-Tetrasek-butyl-4, 4'-diamino-diphenylmethan.
      Vorzugsweise verwendet werden folgende primären aromatischen alkylsubstituierten Phenylen-diamine und Diamino-diphenylmethane: 2,4-Diethyl-, 2,4-Dimethyl-phenylendiamin-1,3, -1,3, 2,4-Diethyl-6-methyl-, 2-Methyl-4,6-diethyl-phenylendiamin-1,3, 2,4,6-Triethyl-phenylendiamin-1,3, 2,4-Dimethyl-6-tert-butyl-, 2,4-Dimethyl-6-isooctyl- und 2,4-Dimethyl-6-cyclohexyl-phenylendiamin-1,3 sowie 3,3'-Diisopropyl-, 3,5-Dimethyl-3',5'-diisopropyl- und 3,3',5,5'-Tetraisopropyl-4,4'-diamino-diphenylmethan.
      Die primären aromatischen Diamine können einzeln oder in Form von Mischungen, beispielsweise aus gegebenenfalls alkylsubstituierten 1,3-Phenylendiaminen, Diamino-diphenylmethanen, 3,3'-di- und/oder 3,3',5,5'-tetraalkylsubstituierten 4,4'-Diamino-diphenylmethanen eingesetzt werden.
      Als sek. aromatische Diamine seien beispielhaft genannt: N,N'-dialkyl-substituierte aromatische Diamine, die gegebenenfalls am aromatischen Kern durch Alkylreste substituiert sein können, mit 1 bis 20, vorzugsweise 1 bis 4 Kohlenstoffatomen im N-Alkylrest, wie N,N'-Diethyl-, N,N'-Di-sek-pentyl-, N,N′-Di-sek-hexyl-, N,N'-Di-sek-decyl-, N,N'-Dicyclohexyl-p- bzw. -m-phenyiendiamin, N,N'-Dimethyl-, N,N'-Diethyl-, N,N-Diisopropyl-, N,N-Di-sek-butyl-, N,N'-Dicyclohexyl-4,4'-diamino-diphenylmethan und N,N'-Di-sek-butyl-benzidin.
      Zweckmäßiger Anwendung finden als Kettenverlängerungs- und/oder Vernetzungsmittel (C) die technisch leicht zugänglichen Alkandiole mit 2 bis 6 Kohlenstoffatomen, Alkantriole mit 3 bis 6 Kohlenstoffatomen, Dialkylenglykolether mit 4 bis 8 Kohlenstoffatomen, alkylsubstituierten Phenylendiamine, 3,3'-di- und/oder 3,3',5,5'-tetraalkyl-substituierten 4,4-Diamino-diphenylmethane.
      Besonders bewährt haben sich als Komponente (C) und daher insbesondere Anwendung finden 2,4-Diethyl-6-methyl-phenylendiamin-1,3, Mischungen aus 2,4-Diethyl-6-methyl- und 2-Methyl-4,6-diethyl-phenylendiamin-1,3 und Mischungen aus den Methyl-diethyl-phenylendiaminen-1,3 und mindestens einer Verbindung aus der Gruppe der Alkandiole mit 2 bis 6 Kohlenstoffatomen, Dialkylenglykolether mit 4 bis 8 Kohlenstoffatomen, Glycerin und Trimethylolpropan.
      Die Kettenverlängerungs- und/oder Vernetzungsmittel (C) oder ihre Gemische werden zur Herstellung der Stoffmischungen in Mengen von 0,5 bis 25 Gew.Teilen, vorzugsweise von 5 bis 20 Gew.Teilen und insbesondere von 8 bis 18 Gew.Teilen, bezogen auf 100 Gew.Teile mindestens einer Verbindung mit mindestens 2 gegenüber Isocyanatgruppen reaktiven Wasserstoffatomen (B) eingesetzt.
   D. Zur Beschleunigung der Urethanbildung aus den Hydroxylgruppen enthaltenden Aufbaukomponenten (B) und (C) und den desaktivierten, organischen Polyisocyanaten (A) werden den lagerstabilen, hitzehärtbaren Stoffmischungen Katalysatoren (D) einverleibt. Als Katalysatoren vorzüglich geeignet sind Metallsalze und -acetylacetonate, so daß diese Verbindungen zweckmäßigerweise eingesetzt werden. Beispielhaft genannt seien als Katalysatoren Bleinaphthenat, Wismut(III)stearat, Zinkstearat, Blei(II)octoat, Zinnoctoat, Phenylquecksilberoctoat, Eisen-(III)acetylacetonat, Eisen(II)acetylacetonat, Kobalt(II)acetylacetonat, Zink(II)acetylacetonat Manganacetylacetonat, Cer(IV)acetylacetonat, Titan(IV)acetylacetonat, Zirkon(IV)acetylacetonat, Bislaurylzinndimercaptid, 2,3,4,6,7,8,9,10-Octahydro-pyramido-1,2-azepin oder Mischungen aus mindestens zwei der genannten Katalysatoren, wobei eine Kombination aus Bleinaphthenat und Wismut(III)stearat, zweckmäpigerweise im Gewichtsverhältnis von 2 bis 1:1, bevorzugt eingesetzt wird. Anwendung finden üblicherweise 0,1 bis 3 Gew.%, vorzugsweise 0,3 bis 1 Gew.% Katalysator, bezogen auf das Gewicht der Komponente (B).
      Den erfindungsgemäßen Stoffmischungen können gegebenenfalls auch noch Hilfsmittel und/oder Zusatzstoffe einverleibt werden. Genannt seien beispielsweise Pigmente, Farbstoffe, Hydrolyseschutzmittel, UV-Stabilisatoren, Antioxidantien und Weichmacher.
      Als Pigmente eignen sich beispielsweise die für Polyisocyanat-polyadditionsprodukte bekannten. Beispielsweise genannt seien Schwarzpaste, Kupfer-, Aluminium-, Eisenpulver, Zinkstaub, Eisenoxid, Cadmiumsulfid u.a.
      Als Weichmacher haben sich bewährt und werden daher vorzugsweise solche verwendet, die mit NCO-Gruppen reaktive Reste gebunden enthalten. Beispielhaft genannt seien 1,4-Butandiol-1,6-Hexandiolpolyadipate, Ketonharze, hergestellt aus Cyclohexanon und Formaldehyd und gelöst in Ricinusöl, z.B. solche mit einer Hydroxylzahl von ungefähr 165, Polykondensationsprodukte, hergestellt aus Phthalsäureanhydrid, Adipinsäure, Ölsäure, Ethylenglykol und Glycerin z.B. mit einer Hydroxylzahl von 370 oder hergestellt aus Phthalsäureanhydrid, Adipinsäure, ölsäure und Trimethylolpropan und Alkylepoxistearate. Die Weichmacher werden üblicherweise in Mengen von 0,5 bis 10 Gew.%, vorzugsweise 1 bis 6 Gew.%, bezogen auf das Gesamtgewicht der Stoffmischung eingesetzt.
      Zusätzliche Angaben zu den obengenannten und nähere Angaben über andere Hilfsmittel und/oder Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964 oder dem Kunststoff-Handbuch, Band VII, Polyurethane, 1. Auflage, 1966 oder 2. Auflage, 1983, Carl Hanser Verlag, München, zu entnehmen.
      Die Herstellung der Stoffmischungen erfolgt nach bekannten, beispielsweise in den EP-A-062 780, EP-A-100 507 oder EP-A-100 508 beschriebenen Verfahren, zweckmäßigerweise unter Verwendung üblicher Dispergier- und Mischaggregate. Das organische Polyisocyanat (A) wird hierzu vorteilhafterweise bei Temperaturen unter 40°C, vorzugsweise bei Temperaturen von von 0 bis 25°C in einer Mischung aus den Aufbaukomponenten (B) bis (D) oder (B) und/oder (C) oder vorzugsweise in mindestens einer Verbindung mit mindestens zwei gegenüber Isocyanatgruppen reaktiven Wasserstoffatomen (B) dispergiert, wobei die Stoffmischungen oder die Aufbaukomponente (B) entweder bereits die gesamte Menge eines oder mehrerer der Desaktivierungsmittel enthalten oder es wird mindestens eines der Desaktivierungsmittel den Stoffmischungen oder der Aufbaukomponente (B) kurz nach dem Dispergiervorgang einverleibt. Beide Verfahrensweisen können auch miteinander kombiniert werden, wobei die Aufbaukomponenten (B) und/oder (C), beispielsweise einen Teil des Desaktivierungsmittels enthalten, während der andere Teil desselben oder eines anderen Desaktivierungsmittels der Stoffmischung nach der Polyisocyanatdispergierung hinzugefügt wird. Wird als kohärente Phase zur Dispergierung der Polyisocyanate nur die Aufbaukomponente (B) oder eine Mischung aus (B) und (C) verwendet, so werden die übrigen Aufbaukomponenten der Stoffmischung, beispielsweise die Aufbaukomponente (D) nachträglich der erhaltenen Dispersion einverleibt. Selbstverständlich kann die Polyisocyanatdispersion auch mit den zur Herstellung verwendeten oder anderen Aufbaukomponenten (B) und/oder (C) gemischt werden.
      Zur Herstellung der Stoffmischungen können die Mengenverhältnisse der Aufbaukomponenten (A) bis (C) in breiten Grenzen, beispielsweise in Verhältnissen von freien Isocyanatgruppen zu Hydroxyl-, Aminogruppen oder zur Summe aus Hydroxyl- und Aminogruppen von 0,8 bis 2,5:1 variiert werden. Stoffmischungen, die die desaktivierten Polyisocyanate in hohen Konzentrationen, beispielsweise in NCO:OH- bzw. NH₂- bzw. OH- plus NH2-Gruppenverhältnissen von 10:1 bis 3:1, vorzugsweise 5:1 bis 3:1 enthalten, können als sogenannter Masterbatch verwendet und vor der Verarbeitung mit den Aufbaukomponenten (B) und/oder (C) verdünnt werden.
      Zur Herstellung von Urethan- und/oder Harnstoffgruppen enthaltenden Folien der Mittelschicht finden vorzugsweise Stoffmischungen Verwendung, bei denen die Verhältnisse von NCO-:OH- und/oder NH₂-Gruppen 0,8 bis 2,5:1, vorzugsweise 0,9 bis 1,2:1 betragen.
      Die Stoffmischungen sind zweckmäßigerweise fließfähig und besitzen bei 23°C eine Viskosität von 500 bis 20 000 mPa·s, vorzugsweise von 1000 bis 10 000 mPa·s.
c) Die erfindungsgemäßen, mit einer konturierten, mehrschichtigen Folie versehenen Polyurethan-Formkörper enthalten als Hinterschicht (c) und Trägermaterial ein kompaktes oder zelliges Polyurethan, wobei flexible, halbharte oder harte Polyurethanschaumstoffe bevorzugt Anwendung finden. Verfahren zur Herstellung von kompakten oder zelligen Polyurethanen, insbesondere von Polyurethanschaumstoffen sind aus Literatur- und Patentpublikationen hinreichend bekannt, so daß sich nähere Ausführungen hierzu erübrigen. Beispielhaft verwiesen wird auf die oben beschriebenen Monographien "High Polymers", Band XVI, Polyurethane, das Kunststoff-Handbuch, Band VII, Polyurethane und die DE-A-31 27 914 oder DE-A-27 32 292.

Für besondere Anwendungszwecke kann es sich als vorteilhaft erweisen, wenn die Hinterschicht (c) aus dem kompakten oder zelligen Polyurethan zusätzlich einen Einleger und/oder Verstärkungsmaterialien enthält.

Bewährt haben sich beispielsweise Einleger aus metallischen Werkstoffen, wie z.B. Aluminium, Kupfer, Messing oder Stahlblech, oder Kunststoffen, wie z.B. Polyamid, Polybutylenterephtalat, oder Mischungen aus Polymeren, Polyamiden und/oder Polyestern.

Als Verstärkungsmaterialien eignen sich beispielsweise kurze oder lange Fasern, wie z.B. Glas-, Kohlenstoff-, organische Synthese- oder Naturfasern, beispielsweise aromatische Polyamid-, Polyesterfasern oder Cellulosefasern, sowie Gewebe, Matten oder Vliese aus solchen Fasern.

Zur Herstellung der erfindungsgemäßen, mit einer konturierten mehrschichtigen Folie versehenen Polyurethan-Formkörper wird der Lack zur Bildung der Deckschicht (a) auf die konturierte, gegebenenfalls mit Trennmittel versehene Innenfläche eines auf 60 bis 150°C, vorzugsweise 80 bis 130°C temperierten Formwerkzeugs, das aus beliebigen Formwerkzeugmaterialien, wie z.B. Epoxid-Polyesterharzmassen oder vorzugsweise aus metallischen Werkstoffen, wie z.B. Aluminium, Gußeisen, Stahl oder Edelstahl, bestehen kann, aufgetragen, z.B. durch Aufstreichen oder Aufsprühen. Nachdem die Lackschicht eine ausreichend hohe Viskosität aufweist, d.h. nicht mehr fließfähig, teilweise oder vollständig getrocknet ist, wird diese bei einer Temperatur im oben genannten Bereich mit der Stoffmischung zur Bildung einer Urethan- und/oder Harnstoffgruppen enthaltenden Folie als Mittelschicht (b) beschichtet. Die Stoffmischung härtet hierbei an der Formwerkzeugoberfläche aus und bildet mit der Lackschicht eine ausgezeichnet haftende Verbundfolie, die problemlos von der Oberfläche des Formwerkzeugs abgetrennt werden kann.

Die Stoffmischung kann auf die temperierte, mit der Lackdeckschicht versehene Formwerkzeugoberfläche nach bekannten Methoden, wie z.B. durch Begießen, Bestreichen oder Besprühen aufgebracht werden. Nach den vorzugsweise angewendeten Ausführungsformen wird die hitzehärtbare Stoffmischung auf die temperierte Formwerkzeugoberfläche gesprüht oder es wird insbesondere das temperierte Formwerkzeug in ein Bad aus der Stoffmischung eingetaucht.

Die beispielhaft genannten Beschichtungsmethoden können jedoch auch miteinander kombiniert werden, wobei zweckmäßigerweise mindestens zwei der Methoden Anwendung finden. Beispielsweise kann eine Folie mit einheitlicher Schichtdicke hergestellt werden durch Eintauchen des temperierten Formwerkzeugs in ein Bad der Stoffmischung, das vorteilhafterweise eine Temperatur von 80 bis 150°C, insbesondere von 90 bis 130°C aufweist, für einen bestimmten Zeitraum. Sobald die ausgehärtete Stoffmischung auf der temperierten Formwerkzeugoberfläche die gewünschte Schichtdicke erreicht hat, wird das Formwerkzeug aus dem Bad entnommen die überschüssige, nicht ausgehärtete Stoffmischung entfernt und die gebildete Verbundfolie vom Formwerkzeug abgetrennt. Es ist jedoch auch möglich, das Formwerkzeug mit der gebildeten Verbundfolie aus dem Bad zu entnehmen und die Schichtdicke der Folie in bestimmten Bereichen z.B. durch Besprühen mit derselben oder einer anderen Stoffmischung zu erhöhen und gegebenenfalls zu modifizieren. Nach der beschriebenen Methode kann beispielsweise aus einer Harnstoffgruppen bildenden Stoffmischung eine Harnstoffgruppen enthaltende Folie hergestellt und diese ganz oder teilweise mit einer Harnstoff- und Urethangruppen bildenden Stoffmischung beschichtet und auf diese Weise die mechanischen Eigenschaften der hergestellten Folie variiert werden. Selbstverständlich kann das temperierte Formwerkzeug zur Bildung einer mehrschichtigen Folie auch nacheinander in mehrere Bäder mit verschiedenartigen Stoffmischungen eingetaucht werden. Je nach gewünschter Modifizierungsart der Folie können die unterschiedlichen Stoffmischungen in beliebiger Reihenfolge nacheinander Anwendung finden. Wie bereits dargelegt wurde, können nach Aushärtung der Stoffmischung auf der Formwerkzeugoberfläche die gebildeten Verbundfolien problemlos abgetrennt werden.

Die als Mittelschicht (b) geeigneten, nach den beispielhaft beschriebenen Verfahren hergestellten Folien besitzen zweckmäßigerweise eine Dicke von 10 bis 20 000 µm, vorzugsweise von 800 bis 3000 µm. Derartige Foliendicken können beispielsweise erzielt werden durch Beschichten mit der erforderlichen Menge der Stoffmischung, zweckmäßigerweise einer Menge von 15 bis 30 000 g/m, vorzugsweise von 1500 bis 6000 g/m. Nach dem vorzugsweise zur Anwendung kommenden Verfahren wird das temperierte Formwerkzeug in Abhängigkeit von der Formwerkzeugtemperatur, der Lackdeckschicht (a), der Stoffmischungstemperatur und der gewünschten Foliendicke für eine bestimmte Zeitdauer, z.B. von 0,5 bis 5 Minuten, vorzugsweise von 1 bis 4 Minuten, in ein Bad mit der Stoffmischung eingetaucht und an der Formwerkzeugoberfläche aushärten gelassen.

Die mit der Deckschicht (a) aus Lack versehene Mittelschicht (b) aus der Urethan- und/oder Harnstoffgruppen enthaltenden Folie, die auch als Verbundfolie bezeichnet werden kann, kann unmittelbar nach der Herstellung im Formwerkzeug unter den obengenannten Reaktionsbedingungen mit einer reaktionsfähigen, treibmittelfreien oder vorzugsweise treibmittelhaltigen Mischung zur Bildung der Polyurethane behandelt werden. Die Polyurethane bildende Reaktionsmischung wird hierzu in den Hohlraum des Formwerkzeugs, dessen Innenfläche mit der Verbundfolie beschichtet ist, eingefüllt oder unter Druck eingespritzt und in dem temperierten Formwerkzeug, das nach dem Befüllen offen bleibt oder verschlossen werden kann, aushärten gelassen.

Nach dem vorzugsweise zur Anwendung kommenden Verfahren wird die gebildete mehrschichtige Verbundfolie aus Lackdeckschicht und Urethan- und/oder Harnstoffgruppen enthaltender Folie aus dem Formwerkzeug entnommen und danach direkt oder nach einer Zwischenlagerung in einer getrennten Verfahrensstufe mit einer reaktionsfähigen, schaumfähigen Mischung zur Bildung von Polyurethanen in an sich bekannter Weise hinterschäumt oder mit einer treibmittelfreien Reaktionsmischung, z.B. durch Ausgießen eines aus der Verbundfolie gebildeten Hohlraums und Aushärten lassen der Reaktionsmischung, behandelt.

Die erfindungsgemäßen mit einer konturierten, mehrschichtigen Folie versehenen Polyurethan-Formkörper finden Verwendung als Bauelemente in unterschiedlichen Industriezweigen. Geeignet sind sie insbesondere als Bauelemente für Verkehrsmittel, z.B. als Armaturenbrett oder Verkleidungselemente für Türen oder Ablagebehälter in Kraftfahrzeugen.

### Beispiel

### a) Herstellung der lagerbeständigen, hitzehärtbaren Stoffmischung

37 Gew.Teile dimeres Uretdiongruppen enthaltendes 2,4-Toluylen-diisocyanat wurden in einer Mischung aus
- 39,48: Gew.Teilen eines Polyoxypropylen(81,5 Gew.%)-polyoxyethylen (18,5 Gew.%)-glykols, mit einem durchschnittlichen Molekulargewicht von 3500,
- 20,00: Gew.Teilen eines trifunktionellen Polyether-polyols mit einem durchschnittlichen Molekulargewicht von 4800, hergestellt durch Polyaddition von 1,2-Propylenoxid an Trimethylolpropan und an schließende Polyaddition von Ethylenoxid an das erhaltene Trimethylolpropan-polyoxypropylen-addukt und
- 9,41: Gew.Teilen eines trifunktionellen polymermodifizierten Polyether-polyols mit einem durchschnittlichen Molekulargewicht von 4000, hergestellt durch Polyaddition von 1,2-Propylenoxid (86 Gew.%) an Glycerin als Startermolekül, anschließende Polyaddition von Ethylenoxid (14 Gew.%) an das erhaltene Glycerin-polyoxypropylenaddukt und Dispergierung eines synthetisch hergestellten Magnesiumaluminiumsilikats (Transpafill® der Firma Degussa) als Füllstoff im Gewichtsverhältnis Polyoxypropylen-polyoxyethylen-triol zu Füllstoff von 85:15,
bei 23°C mit Hilfe eines Dissolvers mit 1000 UpM 5 Minuten lang dispergiert. In die erhaltene Dispersion wurden über einen Zeitraum von 2 Minuten 0,96 Gew.Teile einer 50 gew.%igen Lösung in Ethylenglykol eines Reaktionsprodukts, hergestellt durch Umsetzung von einem Mol 3,3'-Dimethyl-4,4'-diamino-dicyclohexylmethan mit 2 Molen Ölsäure bei 23°C, eindispergiert.

Man erhielt eine gutfließende Dispersion, in die unter Rühren bei 23°C eingebracht wurden:
- 1,0: Gew.Teile Trimethylolpropan,
- 3,62: Gew.Teile Ethylenglykol,
- 0,52: Gew.Teile einer 24 gew.%igen Lösung von Blei(II)naphthenat in Naphthensäure,
- 20,0: Gew.Teile eines Polyoxypropylen-glykols mit einem Molekulargewicht von 600 und
- 5: Gew.Teile 1-Methyl-3,5-diethyl-2,4-diaminobenzol.

Die erhaltene Stoffmischung war mehr als 12 Monate lagerstabil und besaß bei 23°C eine Viskosität von 2775 m·Pa·s.

### b) Herstellung des Polyurethan-Halbhartschaumstoffs zur Hinterschäumung der mehrschichtigen Folie

### A-Komponente:

Mischung aus
- 84: Gew.-Teilen eines mit Glycerin gestarteten Polyoxypropylen(86 Gew.%)-polyoxyethylen(14 Gew.%)-triols mit der Hydroxylzahl 28,
- 5: Gew.-Teilen eines Pfropfpolyether-polyols, hergestellt durch in situ-Polymerisation von 20 Gew.-Teilen einer Mischung aus Styrol und Acrylnitril im Gewichtsverhältnis 1:1 in einem mit Glycerin gestarteten Polyoxypropylen(86 Gew.%)-polyoxyethylen(14 Gew.%)-triol, mit einer Hydroxylzahl von 28,
- 0,5: Gew.-Teilen Triethanolamin,
- 2,5: Gew.-Teilen Wasser,
- 5,0: Gew.-Teilen eines Polyether-polyols mit der Hydroxylzahl von 768, hergestellt aus Ethylendiamin als Starter und 1,2-Propylenoxid,
- 0,4: Gew.-Teilen eines Schaumstabilisators auf Silikonbasis (Tegostab® B4690 der Firma Goldschmidt AG, Essen) und
- 0,6: Gew.-Teilen einer 40 gew.%igen wäßrigen Kaliumacetatlösung

### B-Komponente:

Mischung aus Diphenylmethan-diisocyanaten und Polyphenyl-polymethylen-polyisocyanaten (Roh-MDI) mit einem NCO-Gehalt von 31±1 Gew.%.

Zur Herstellung des halbharten Polyurethanschaumstoffs für die Hinterschäumung wurden die A- und B Komponente bei 23°C im Gewichtsverhältnis von 100:55 intensiv gemischt, die Reaktionsmischung auf die Rückseite der mit Polyurethanlack beschichteten Folie aufgebracht und dort aufschäumen gelassen.

### c) Herstellung des Formkörpers

Ein elektrisch beheizbares Formwerkzeug aus Gußeisen mit der Raumform eines Automobilhandschuhfachs mit einer Formwerkzeugtemperatur von 110°C und einer konturierten Formwerkzeugoberfläche wurde mit einem im Kohlenwasserstoff gelösten Wachs (Acmos®180 ST-5 der Firma Acmos) als Trennmittel eingesprüht.

Anschließend wurde die Formwerkzeugoberfläche mit 6 g/m2 eines lichtbeständigen Polyurethanlacks auf der Grundlage eines aromatischen Polyester-polyols und eines modifizierten Hexamethylen-diisocyanats (Handelsprodukt 2 K-PUR-Lack Nr. GG 01-8101 der BASF-Farben und Lacke AG) unter einem Druck von 3 bar besprüht.

Nach einer Trockenzeit von 60 Sekunden wurde die Stoffmischung gemäß Beispiel la in den Hohlraum des Formwerkzeugs eingegossen und gleichmäßig über die mit Polyurethanlack beschichtete Formwerkzeuginnenfläche verteilt.

Die überschüssige Stoffmischung wurde nach 20 Sekunden durch Ausgießen aus dem Formwerkzeughohlraum abgetrennt.

Nach einer Aushärtungszeit von 60 Sekunden wurde die mit Polyurethanlack beschichtete Folie vom Formwerkzeug abgetrennt und mit der reaktionsfähigen Mischung zur Bildung des Polyurethanschaumstoffs nach Beispiel 1b hinterschäumt.

## Patentansprüche

1. Mit einer konturierten, mehrschichtigen Folie versehene Polyurethan-Formkörper, die bestehen aus
a) einer Deckschicht aus Lack,
b) einer Mittelschicht aus einer Urethan- und/oder Harnstoffgruppen enthaltenden Folie und
c) einer Hinterschicht aus einem kompakten oder zelligen Polyurethan,
und dadurch gekennzeichnet sind, daß die Urethan- und/oder Harnstoffgruppen enthaltende Folie der Mittelschicht (b) hergestellt wird durch Aushärten lassen bei 60 bis 150°C einer hitzehärtbaren Stoffmischung, die enthält
A. ein organisches Polyisocyanat,
B. mindestens eine Verbindung mit mindestens zwei gegenüber Isocyanatgruppen reaktiven Wasserstoffatomen und einem Molekulargewicht von 250 bis 8500,
wobei man ein bei Raumtemperatur festes organisches Polyisocyanat (A), in Form von diskreten Teilchen mit einem Teilchendurchmesser von 0,1 bis 150 µm, an der Teilchenoberfläche durch chemische Reaktion mit einem Desaktivierungsmittel, hergestellt aus einem Mol eines primären organischen Amins mit 2 bis 32 Kohlenstoffatomen, ausgewählt aus der Gruppe der aromatischen, aliphatischen, cycloaliphatischen, cycloaliphatisch-aliphatischen und aromatisch-aliphatischen Diamine oder Mischungen davon und 1,5 bis 2,5 Molen einer organischen Monocarbonsäure oder deren Anhydrid, mit mindestens 6 Kohlenstoffatomen oder einer Arylsulfonsäure, desaktiviert, indem man 0,1 bis 20 Äquivalent% der insgesamt vorhandenen Isocyanatgruppen von (A) mit dem Desaktivierungsmittel umsetzt und das erhaltene oberflächenmodifizierte Polyisocyanat in mindestens einer Verbindung mit mindestens zwei gegenüber Isocyanatgruppen reaktiven Wasserstoffatomen dispergiert,
C. Kettenverlängerungsmittel und/oder Vernetzungsmittel mit mit einem Molekulargewicht von 62 bis 500 und einer Funktionalität von 2 bis 4 und
D. Katalysatoren.

2. Mit einer konturierten, mehrschichtigen Folie versehene Polyurethan-Formkörper nach Anspruch 1, dadurch gekennzeichnet, daß man als Desaktivierungsmittel ein Reaktionsprodukt verwendet, hergestellt aus einem Mol eines aliphatischen, cycloaliphatischen oder cycloaliphatischen-aliphatischen Diamins mit 6 bis 18 Kohlenstoffatomen oder Mischungen davon und 1,8 bis 2,2 Molen einer aliphatischen Monocarbonsäure mit 12 bis 36 Kohlenstoffatomen.

3. Mit einer konturierten, mehrschichtigen Folie versehene Polyurethan-Formkörper nach einem der Ansprüche 1 bis 2, dadurch gekennzeichnet, daß man als Desaktivierungsmittel ein Reaktionsprodukt verwendet, hergestellt aus einem Mol 3,3'-Dimethyl-4,4'-diaminodicyclohexylmethan und 2 Molen ölsäure und/oder Stearinsäure.

4. Mit einer konturierten, mehrschichtigen Folie versehene Polyurethan-Formkörper nach einem der Ansprüche 1 bis 3, dadurch gekennzeichnet, daß man als Katalysator (D) der Stoffmischung verwendet Bleinaphthenat, Wismut(III)stearat, Zinkstearat, Blei(II)octoat, Zinnoctoat, Phenylqucksilberoctoat, Eisen(III)acetylacetonat, Eisen(II)acetylacetonat, Kobalt(II)acetylacetonat, Zink(II)acetylacetonat, Manganacetylacetonat, Cer(IV)acetylacetonat, Titan(IV)acetylacetonat, Zirkon(IV)acetylacetonat, Bislaurylzinndimercaptid, 2,3,4,6,7,8,9,10-Octahydro-pyramido-1,2-azepin oder Mischungen aus mindestens 2 der genannten Katalysatoren, vorzugsweise einer Kombination aus Bleinaphthenat und Wismut(III)stearat.

5. Mit einer Konturierten, mehrschichtigen Folie versehene Polyurethan- Formkörper nach einem der Ansprüche 1 bis 4, dadurch gekennzeichnet, daß die Deckschicht (a) aus einem Polyurethanlack besteht.

6. Mit einer konturierten, mehrschichtigen Folie versehene Polyurethan-Formkörper nach einem der Ansprüche 1 bis 5, dadurch gekennzeichnet, daß man die hitzehärtbare Stoffmischung an der Oberfläche eines mit einer Lackschicht versehenen temperierbaren Formwer zeugs aushärten läßt.

7. Verfahren zur Herstellung von mit einer konturierten, mehrschichtigen Folie versehenen Polyurethan-Formkörpern, bestehend aus
a) einer Deckschicht aus Lack,
b) einer Mittelschicht aus einer Urethan- und/oder Harnstoffgruppen enthaltenden Folie, und
c) einer Hinterschicht aus einem kompakten oder zelligen Polyurethan,
dadurch gekennzeichnet, daß man auf die konturierte Innenfläche eines auf 60 bis 150°C temperierten Formwerkzeugs eine Lackschicht aufträgt,
nach ausreichender Viskosität der Lackschicht diese mit einer hitzehärtbaren Stoffmischung, die enthält:
A. ein organisches Polyisocyanat,
B. mindestens eine Verbindung mit mindestens zwei gegenüber Isocyanatgruppen reaktiven Wasserstoffatomen und einem Molekulargewicht von 250 bis 8500,
wobei man ein bei Raumtemperatur festes organisches Polyisocyanat (A), in Form von diskreten Teilchen mit einem Teilchendurchmesser von 0,1 bis 150 µm, an der Teilchenoberfläche durch chemische Reaktion mit einem Desaktivierungsmittel, hergestellt aus einem Mol eines primären organischen Amins mit 2 bis 32 Kohlenstoffatomen, ausgewählt aus der Gruppe der aromatischen, aliphatischen, cycloaliphatischen, cycloaliphatisch-aliphatischen und aromatisch-aliphatischen Diamine oder Mischungen davon und 1,5 bis 2,5 Molen einer organischen Monocarbonsäure oder deren Anhydrid, mit mindestens 6 Kohlenstoffatomen oder einer Arylsulfonsäure, desaktiviert, indem man 0,1 bis 20 Äquivalent% der insgesamt vorhandenen Isocyanatgruppen von (A) mit dem Desaktivierungsmittel umsetzt und das erhaltene oberflächenmodifizierte Polyisocyanat in mindestens einer Verbindung mit mindestens zwei gegenüber Isocyanatgruppen reaktiven Wasserstoffatomen (B) dispergiert,
C. Kettenverlängerungsmittel und/oder Vernetzungsmittel mit einem Molekulargewicht von 62 bis 500 und einer Funktionalität von 2 bis 4 und
D. Katalysatoren
beschichtet,
die Stoffmischung aushärten läßt und die gebildete mehrschichtige Folie mit einer reaktionsfähigen, treibmittelhaltigen oder treibmittelfreien Mischung zur Bildung der Polyurethane behandelt
oder die gebildete Folie aus dem Formwerkzeug entnimmt und danach direkt oder nach einer Zwischenlagerung in einer getrennten verfahrensstufe mit einer reaktionsfähigen, treibmittelhaltigen oder treibmittelfreien Mischung zur Bildung von Polyurethanen behandelt.

8. Verwendung der mit einer konturierten, mehrschichtigen Folie versehenen Polyurethan-Formkörper nach Anspruch 1 als Bauelemente für Verkehrsmittel, insbesondere als Armaturenbrett oder Verkleidungselemente für Türen oder Ablagebehälter in Kraftfahrzeugen.

## Claims

1. A polyurethane molding provided with a contoured, multilayer film, which molding comprises
a) a topcoat of paint or varnish,
b) an intermediate layer of a film containing urethane and/or urea groups and
c) a back layer of a compact or cellular polyurethane,
and wherein the film containing urethane and/or urea groups of the intermediate layer (b) is produced by allowing a heat-curable mixture comprising
A. an organic polyisocyanate,
B. at least one compound containing at least two hyrogen atoms reactive towards isocyanate groups and having a molecular weight of from 250 to 8500,
with an organic polyisocyanate (A) which is solid at room temperature, in the form of discrete particles having a particle diameter of from 0.1 to 150 µm, being deactivated at the particle surface by chemical reaction with a deactivating agent prepared from 1 mol of a primary organic amine having from 2 to 32 carbon atoms, selected from the group of aromatic, aliphatic, cycloaliphatic, cycloaliphatic-aliphatic and aromatic-aliphatic diamines or mixtures thereof, and from 1.5 to 2.5 mol of an organic monocarboxylic acid or its anhydride having at least 6 carbon atoms or an arylsulfonic acid, by reacting from 0.1 to 20 equivalent-% of the total isocyanate groups present in (A) with the deactivating agent and dispersing the surface-modified polyisocyanate obtained in at least one compound containing at least two hydrogen atoms reactive towards isocyanate groups,
C. chain extenders and/or crosslinkers having a molecular weight of from 62 to 500 and a functionality of from 2 to 4 and
D. Catalysts
to cure at from 60 to 150°C.

2. A polyurethane molding provided with a contoured, multilayer film as claimed in claim 1, wherein the deactivating agent used is a reaction product prepared from 1 mol of an aliphatic, cycloaliphatic or cyclo-aliphatic-aliphatic diamine having from 6 to 18 carbon atoms or a mixture thereof and from 1.8 to 2.2 mol of an aliphatic monocarboxylic acid having from 12 to 36 carbon atoms.

3. A polyurethane molding provided with a contoured, multilayer film as claimed in claim 1 or 2, wherein the deactivating agent used is a reaction product prepared from 1 mol of 3,3'-dimethyl-4,4'-diaminodicyclohexyl-methane and 2 mol of oleic acid and/or stearic acid.

4. A polyurethane molding provided with a contoured, multilayer film as claimed in any of claims 1 to 3, wherein the catalyst (D) used in the mixture is lead naphthenate, bismuth(III) stearate, zinc stearate, lead(II) octoate, tin octoate, phenylmercury octoate, iron(III) acetylacetonate, iron(II) acetylacetonate, cobalt(11) acetylacetonate, zinc(II) acetylacetonate, manganese acetylacetonate, cerium(IV) acetylacetonate, titanium(IV) acetylacetonate, zirconium(IV) acetylacetonate, bislauryltin dimercaptide, 2,3,4,6,7,8,9,10-octahydropyramido-1,2-azepine or mixtures of at least 2 of the specified catalysts, preferably a combination of lead naphthenate and bismuth(III) stearate.

5. A polyurethane molding provided with a contoured, multilayer film as claimed in any of claims 1 to 4, wherein the topcoat (a) comprises a polyurethane finish.

6. A polyurethane molding provided with a contoured, multilayer film, as claimed in any of claims 1 to 5, wherein the heat-curable mixture is allowed to cool on the surface of a heatable mold provided with a layer of paint or varnish.

7. A process for producing a polyurethane molding provided with a contoured, multilayer film, which molding comprises
a) a topcoat of paint or varnish,
b) an intermediate layer of a film containing urethane and/or urea groups and
c) a back layer of a compact or cellular polyurethane,
wherein a layer of paint or varnish is applied to the contoured inner surface of a mold heated to from 60 to 150°C, and after the layer of paint or varnish has reached a sufficient viscosity it is coated with a heat-curable mixture comprising:
A. an organic polyisocyanate,
B. at least one compound containing at least two hyrogen atoms reactive towards isocyanate groups and having a molecular weight of from 250 to 8500,
with an organic polyisocyanate (A) which is solid at room temperature, in the form of discrete particles having a particle diameter of from 0.1 to 150 µm, being deactivated at the particle surface by chemical reaction with a deactivating agent prepared from 1 mol of a primary organic amine having from 2 to 32 carbon atoms, selected from the group of aromatic, aliphatic, cycloaliphatic, cycloaliphatic-aliphatic and aromatic-aliphatic diamines or mixtures thereof, and from 1.5 to 2.5 mol of an organic monocarboxylic acid or its anhydride having at least 6 carbon atoms or an arylsulfonic acid, by reacting from 0.1 to 20 equivalent-% of the total isocyanate groups present in (A) with the deactivating agent and dispersing the surface-modified polyisocyanate obtained in at least one compound containing at least two hydrogen atoms reactive towards isocyanate groups,
C. chain extenders and/or crosslinkers having a molecular weight of from 62 to 500 and a functionality of from 2 to 4 and
D. Catalysts
the mixture is allowed to cure and the multilayer film formed is treated with a reactive, blowing agent-containing or blowing agent-free mixture to form the polyurethane,
or the film formed is taken from the mold and then treated directly or after intermediate storage in a separate process step with a reactive, blowing agent-containing or blowing agent-free mixture to form the polyurethane.

8. Use of the polyurethane molding provided with a contoured, multilayer film as claimed in claim 1 as a component for means of transport, in particular as dashboard or lining components for doors or glove compartments in motor vehicles.

## Revendications

1. Pièces moulées en polyuréthanne munies d'une feuille multi-couche profilée, qui consistent en
a) une couche de recouvrement en laque,
b) une couche médiane en une feuille contenant des groupes uréthanne et/ou urée et
c) une couche postérieure en un polyuréthanne compact ou 'cellulaire,
et sont caractérisées en ce que la feuille contenant des groupes uréthanne et/ou urée de la couche médiane (b) est préparée par durcissement entre 60 et 150°C d'un mélange de substances thermodurcissables, qui contient
A. un polyisocyanate organique,
B. au moins un composé ayant au moins deux atomes d'hydrogène réactifs vis-à-vis des groupes isocyanates et une masse moléculaire de 250 à 8500, tandis qu'on désactive un polyisocyanate organique (A) solide à température ambiante, sous forme de particules discrètes ayant un diamètre moyen des particules de 0,1 à150 µm, sur la surface des particules par réaction chimique avec un agent de désactivation, préparé à partir d'une mole d'une amine organique primaire ayant 2 à 32 atomes de carbone, choisie dans le groupe des diamines aromatiques, aliphatiques, cycloaliphatiques, cycloaliphatiques-aliphatiques et aromatiques-aliphatiques ou des mélanges de celles-ci, et de 1,5 à 2,5 moles d'un acide monocarboxylique organique ou d'un anhydride de celui-ci, ayant au moins 6 atomes de carbone, ou d'un acide arylsulfonique, en faisant réagir 0,1 à 20 % d'équivalent des groupes isocyanate de (A) présents au total avec l'agent de déactivation et en dispersant le polyisocyanate modifié en surface obtenu dans au moins un composé ayant au moins deux atomes d'hydrogène réactifs vis-à-vis des groupes isocyanate,
C. des agents d'allongement de chaîne et/ou des agents de réticulation ayant une masse moléculaire de 62 à 500 et une fonctionnalité de 2 à 4, et
D. des catalyseurs.

2. Pièces moulées en polyuréthanne munies d'une feuille multi-couche profilée selon la revendication 1, caractérisées en ce qu'on emploie comme agent de désactivation un produit de réaction préparé à partir d'une mole d'une diamine aliphatique, cycloaliphatique ou cycloaliphatique-aliphatique, ayant 6 à 18 atomes de carbone ou de mélanges de celles-ci et de 1,8 à 2,2 moles d'un acide monocarboxylique aliphatique ayant 12 à 36 atomes de carbone.

3. Pièces moulées en polyuréthanne munies d'une feuille multi-couche profilée selon l'une des revendications 1 à 2, caractérisées en ce qu'on emploie comme agent de désactivation un produit de réaction préparé à partir d'une mole de 3,3'-diméthyl-4,4'-diaminodicyclohexylméthane et de 2 moles d'acide oléique et/ou d'acide stéarique.

4. Pièces moulées en polyuréthanne munies d'une feuille multi-couche profilée selon l'une quelconque des revendications 1 à 3, caractérisées en ce qu'on emploie comme catalyseur (D) du mélange de substances du naphténate de plomb, du stéarate de bismuth(III), du stéarate de zinc, de l'octoate de plomb(II), de l'octoate d'étain, de l'octoate de phénylmercure, de l'acétylacétonate de fer(III), de l'acétylacétonate de fer(II) , de l'acétylacétonate de cobalt(II), de l'acétylacétonate de zinc(II), de l'acétylacétonate de manganèse, de l'acétylacétonate de cérium(IV), de l'acétylacétonate de titane(IV), de l'acétylacétonate de zirconium(IV), du dimercaptide de bislaurylétain, de la 2,3,4,6,7,8,9,10-octahydro-pyramido-1,2-azépine ou des mélanges d'au moins 2 des catalyseurs mentionnés, de préférence une combinaison de naphténate de plomb et de stéarate de bismuth(III).

5. Pièces moulées en polyuréthanne munies d'une feuille multi-couche profilée selon l'une quelconque des revendications 1 à 4, caractérisées en ce que la couche de recouvrement (a) consiste en une laque de polyuréthanne.

6. Pièces moulées en polyuréthanne munies d'une feuille multi-couche profilée selon l'une quelconque des revendications 1 à 5, caractérisées en ce qu'on fait durcir le mélange de substances thermodurcissables à la surface d'un moule dont la température peut être ajustée et muni d'une couche de laque.

7. Procédé pour la préparation de pièces moulées en polyuréthanne munies d'une feuille multi-couche profilée, consistant en
a) une couche de recouvrement en laque,
b) une couche médiane en une feuille contenant des groupes uréthanne et/ou urée et
c) une couche postérieure en un polyuréthanne compact ou cellulaire,
caractérisé en ce qu'on applique sur la face interne profilée d'un moule maintenu à une température comprise entre 60 et 150°C une couche de laque, qu'on revouvre la couche de laque ayant atteint une viscosité suffisante avec un mélange de substances thermodurcissables, qui contient:
A. un polyisocyanate organique,
B. au moins un composé ayant au moins deux atomes d'hydrogène réactifs vis-à-vis des groupes isocyanates et une masse moléculaire de 250 à 8500, tandis qu'on désactive un polyisocyanate organique (A) solide à température ambiante, sous forme de particules discrètes ayant un diamètre moyen des particules de 0,1 à 150 µm, sur la surface des particules par réaction chimique avec un agent de désactivation, préparé à partir d'une mole d'une amine organique primaire ayant 2 à 32 atomes de carbone, choisie dans le groupe des diamines aromatiques, aliphatiques, cycloaliphatiques, cycloaliphatiques-aliphatiques et aromatiques-aliphatiques ou des mélanges de celles-ci, et de 1,5 à 2,5 moles d'un acide monocarboxylique organique ou d'un anhydride de celui-ci, ayant au moins 6 atomes de carbone, ou d'un acide arylsulfonique, en faisant réagir 0,1 à 20 % d'équivalent des groupes isocyanate de (A) présents au total avec l'agent de déactivation et en dispersant le polyisocyanate modifié en surface obtenu dans au moins un composé ayant au moins deux atomes d'hydrogène réactifs vis-à-vis des groupes isocyanate,
C. des agents d'allongement de chaîne et/ou des agents de réticulation ayant une masse moléculaire de 62 à 500 et une fonctionnalité de 2 à 4, et
D. des catalyseurs,
on fait durcir le mélange de substances et on traite la feuille multi-couches formée avec un mélange réactif, contenant un agent d'expansion ou exempt d'agent d'expansion, pour la formation des polyuréthannes,
ou on enlève la feuille formée du moule et ensuite on la traite directement ou après conservation intermédiaire dans une étape opératoire séparée avec un mélange réactif, contenant un agent d'expansion ou exempt d'agent d'expansion pour la formation de polyuréthannes.

8. Utilisation des pièces moulées en polyuréthanne munies d'une feuille multi-couche profilée selon la revendication 1 comme éléments de construction pour moyens de circulation, en particulier comme tableau de bord ou éléments de revêtement pour portes ou récipients vide-poches dans des véhicules automobiles.
